# EUROPEAN PATENT SPECIFICATION

(11) **EP 1 228 799 B1**
(45) Date of publication and mention of the grant of the patent: **04.05.2005**
(21) Application number: 01300960.0
(22) Date of filing: 02.02.2001
(51) Int. Cl.: B01D 53/047

(54) **Very large-scale pressure swing adsorption processes**
Druckwechseladsorptionsverfahren in sehr grossem Masstab
Procédés d'adsorption à pression alternée à très grande échelle

(43) Date of publication of application: 07.08.2002
(73) Proprietor: UOP LLC, Des Plaines, IL 60017-5017 (US)
(72) Inventor: Whysall, Michael, 2030 Antwerp (BE); Wagemans, Ludovicus J.M., 2030 Antwerp (BE)
(74) Representative: Green, Mark Charles

(56) References cited:
- EP-A- 0 305 663
- US-A- 3 738 087
- US-A- 3 986 849
- US-A- 4 129 424
- US-A- 4 475 929

## Description

### BACKGROUND OF THE INVENTION

The present invention relates to processes for the separation of gases using pressure swing adsorption (PSA) that significantly expands the capacity of the separation process.

PSA provides an efficient and economical means for separating a multi-component gas stream containing at least two gases having different adsorption characteristics. The more strongly adsorbable gas can be an impurity which is removed from the less strongly adsorbable gas which is taken off as product or the more strongly adsorbable gas can be the desired product which is separated from the less strongly adsorbable gas. For example, it may be desired to remove carbon monoxide and light hydrocarbons from a hydrogencontaining feed stream to produce a purified (99+ percent) hydrogen stream for a hydrocracking or other catalytic process where these impurities could adversely affect the catalyst or the reaction. On the other hand, it may be desired to recover more strongly adsorbable gases, such as ethylene, from a feedstream to produce an ethylene-rich product.

In PSA, a multi-component gas is typically fed to at least one of a plurality of adsorption zones at an elevated pressure effective to adsorb at least one component, while at least one other component passes through. At a defined time, the feedstream to the adsorber is terminated and the adsorption zone is depressurized by one or more cocurrent depressurization steps wherein pressure is reduced to a defined level which permits the separated, less strongly adsorbed component or components remaining in the adsorption zone to be drawn off without significant concentration of the more strongly adsorbed components. Then, the adsorption zone is depressurized by a countercurrent depressurization step wherein the pressure on the adsorption zone is further reduced by withdrawing desorbed gas countercurrently to the direction of the feedstream. Finally, the adsorption zone is purged with the effluent from an adsorbent bed undergoing a cocurrent depressurization step and repressurized. The final stage of repressurization is typically with product gas and is often referred to as product repressurization. In multi-zone systems, there are typically additional steps and those noted above may be done in stages. US-A-3,176,444, US-A-3,986,849 and US-A-3,430,418 and US-A-3,703,068, among others, describe multi-zone, adiabatic PSA systems employing both cocurrent and countercurrent depressurization.

Various classes of adsorbents are known to be suitable for use in PSA systems, the selection of which is dependent upon the feedstream components and other factors generally known to those skilled in the art. In general, suitable adsorbents include molecular sieves, silica gel, activated carbon, and activated alumina. For some separations, specialized adsorbents can be advantageous. PSA generally employs weak adsorbents and is used for separations wherein the amount of the component to be separated can range from traces to greater than 95 mole percent. PSA systems are preferred when high concentrations of valuable feedstock, products, or reusable solvents are to be recovered. A PSA cycle is one in which the desorption takes place at a pressure much lower than adsorption. In some applications, the desorption takes place under vacuum conditions -- vacuum swing adsorption (VSA). To overcome the inherent low operating loadings on the weak adsorbent, PSA cycles generally have cycle times that are short -- on the order of seconds to minutes -- to maintain reasonably sized adsorbent beds.

One of the problems of building modern gas processing facilities is that the size of the facility or the amount of gas to be treated in any one facility is continuing to increase. Capacities of modern gas processing complexes are generally greater than about 110 thousand normal cubic meters per hour (100 million standard cubic feet per day). Most PSA vessels are limited to a diameter which can be transported to a construction site which generally limits the vessels to a diameter of about 4 meters (about 13 feet) and the height of the vessel is limited by the crush strength of the adsorbent particle. For capacities greater than about 110 thousand normal cubic meters per hour (100 million standard cubic feet per day), PSA processes are provided in multiple trains of duplicate equipment such as pumps, heaters, lines, valves, vessels, and compressors.

### SUMMARY OF THE INVENTION

According to the present invention, a process is provided which overcomes historical limitations to the capacity of PSA units for a wide variety of gas separations. Capacities in excess of about 110 thousand normal cubic meters per hour (100 million standard cubic feet per day) can now be achieved in a single integrated process train. The single integrated process train can comprise from 10 to 20 adsorbent beds. This equipment reduction is enabled by a departure from the accepted principle in the PSA arts that the length of the purge step must be equal to or less than the length of the adsorption step. Applicants have discovered that increasing the purge time relative to the adsorption step can provide for significant increases in capacity with a minimum loss in recovery or performance. It is preferred that the ratio of the purge step time to the adsorption step time be greater than 1.0 and less than 2.0. The benefit of this discovery is that very large-scale PSA units can now be constructed for a cost significantly lower than the cost of a second parallel train of equipment.

It is an objective of the present invention to provide a PSA process for very large gas processing units in a single train of equipment.

It is an objective of the present invention to provide a process sequence which overcomes the physical limitations of vessel size and adsorbent strength to permit the processing of large amounts of feed without giving up overall performance of large-scale gas separation systems.

In one embodiment, the present invention is a process for the separation of a non-adsorbable gas from a gas mixture comprising the non-adsorbable gas and an adsorbable gas in a single train PSA zone. The process comprises passing the gas mixture to the single train PSA zone and withdrawing a product gas stream comprising the non-adsorbable gas and a waste gas stream comprising the adsorbable gas. The single train PSA zone has a plurality of adsorbent beds wherein each adsorbent bed employs an adsorption step, at least three cocurrent equalization steps including a final cocurrent equalization step, a provide-purge step, a countercurrent blow down step, a purge step, at least three countercurrent equalization steps including a final countercurrent equalization step and a repressurization step. Each of the process steps occurs in a sequential manner and are offset in time such that the adsorption step occurs over an adsorption step time, the provide-purge step occurs over a provide-purge step time and a purge step occurs over a purge step time. The purge step time is greater than the adsorption step time, wherein the purge step comprises a step wherein the adsorbent bed which is undergoing a purge step is receiving a purge gas from one or more other adsorbent beds which are undergoing the provide-purge step and wherein these one or more other adsorbent beds are simultaneously providing the purge gas to the adsorbent bed undergoing the purge step. At any time, the number of adsorption beds undergoing the adsorption step is exceeded by the number of adsorbent beds undergoing the purge step.

The process may separate hydrogen from a gas mixture comprising hydrogen, carbon dioxide, and nitrogen.

The process also may separate a non-adsorbable gas from a gas mixture comprising the non-adsorbable gas and an adsorbable gas in a multiple adsorbent bed PSA zone. This process comprises the following steps. The gas mixture at an adsorption pressure is passed to a first adsorbent bed of a plurality of adsorbent beds in the PSA zone. Each of the adsorbent beds contains an adsorbent selective for the adsorption of the adsorbable gas in an adsorption step over an adsorption step time and an adsorption effluent stream is recovered therefrom. The first adsorption zone is cocurrently depressurizing in equalization steps with other adsorbent beds wherein each of the other adsorption beds have a sequentially lower equalization pressure. The cocurrent depressurization step is repeated at least two times to reach a last equalization step. The first adsorbent bed is further cocurrently depressurized to provide a desorption effluent stream in a provide-purge step over a provide-purge time and simultaneously the desorption effluent stream is passed to at least two other adsorbent beds which are undergoing the purge step. The first adsorbent bed is countercurrently depressurized to a blow down pressure and a waste stream is recovered at a desorption pressure. The first adsorbent bed is purged with a purge stream for a purge step time wherein the purge step time is greater than the adsorption step time. The purge stream is passed from one or more adsorbent beds undergoing a cocurrent provide-purge step or undergoing a cocurrent equalization step. The first adsorbent bed is countercurrently repressurized by equalizing the pressure in the first adsorbent bed with other adsorbent beds wherein each of the other adsorbent beds have a sequentially higher equalization pressure and this countercurrent repressurization step is repeated at least two times. The first adsorbent bed is a countercurrently repressurized bed with a portion of the adsorption effluent stream and the above process steps are repeated to provide a continuous process.

### BRIEF DESCRIPTION OF THE DRAWINGS

FIG. 1 is a simplified cycle chart illustrating a conventional 16-bed PSA separation system of the prior art.
FIG. 2 is a simplified cycle chart illustrating the novel PSA cycle for a 16-bed system of the present invention.
FIG. 3 is a simplified cycle chart illustrating a variation of the novel PSA cycle for a 16-bed system of the present invention.

### DETAILED DESCRIPTION OF THE INVENTION

The feed to the process of the current invention can include hydrogen, carbon monoxide, carbon dioxide, nitrogen, inert gases, and hydrocarbons. The process of the current invention can be used to separate hydrogen from adsorbable compounds such as carbon monoxide, carbon dioxide, nitrogen, and hydrocarbons or the process can be used to separate methane from less adsorbable compounds including carbon dioxide, sulfur oxides, hydrogen sulfide, heavier hydrocarbons, and mixtures thereof. By the term "hydrocarbons", it is meant hydrocarbons having from 1 to 8 carbon atoms per molecule including, alkanes, alkenes, cycloalkenes, and aromatic hydrocarbons such as benzene. By the term "a single train of equipment", it is meant a succession of process equipment including pumps, heaters, vessels, valves, lines, and compressors which are assembled to perform a specific task such as gas separation which does not contain a complete duplication of equipment. A single train is contrasted with a multiple train process which comprises a series of parallel, identical successions of such process equipment assembled to perform a single task.

In accordance with the present invention, the adsorption pressure is generally from about 350 kPa to about 7 MPa (50 to 1000 psia) and preferably from about 700 kPa to about 3.5 MPa (100 to 510 psia). The desorption pressure is preferably from about 3 to 550 kPa (0.5 to 80 psia) and more preferably the desorption pressure ranges from about 3 to about 210 kPa (0.5 to 30 psia). Suitable operating temperatures are generally within the range of from about 10° to 65°C (50° to 150°F). There can be a variety of cocurrent depressurization steps to intermediate pressures, cocurrent purging steps, and countercurrent purging steps, all of which are well known to those skilled in the art and described in the previously cited patents relating to PSA processes. For example, one to five or more of such cocurrent depressurization steps can be employed for pressure equalization to further improve product recovery.

The PSA process of the present invention is of the general PSA type. The feedstream is introduced to an adsorbent bed undergoing adsorption at the highest pressure, or the adsorption pressure, to an inlet end of an adsorbent bed having the inlet end and a discharge end opposite.

The adsorbent may comprise powdered solid, crystalline compounds capable of adsorbing and desorbing the adsorbable compound. Examples of such adsorbents include silica gels, activated aluminas, activated carbon, molecular sieves, and mixtures thereof. Molecular sieves include zeolite molecular sieves. The preferred adsorbents are zeolites.

US-A-3,986,849 describes various cycles using for example an adsorption time of 240 seconds in a 10-adsorbent bed configuration with a total cycle time of 13 minutes, 20 seconds. By increasing the number of beds, the total adsorption time can be reduced. For example, for the same adsorption time of 240 seconds in a 12-adsorbent bed configuration, the total cycle time may be reduced to 12 minutes. When the same adsorbent volume is used for the 10- and the 12-adsorbent bed configurations and provided the same relative adsorbent inventory per unit volume of feed is required, the 12 bed configuration increases product capacity about 33 percent. Similarly, for the same adsorption time of 240 seconds in a 14-adsorbent bed configuration, the total cycle time would be reduced to 11 minutes, 12 seconds and an increase in product capacity relative to the 10-adsorbent bed configuration of 66 percent. The same analysis can be applied to configurations with any number of adsorbers, odd or even. In general, holding the adsorption time constant reduces the total cycle time and increases the capacity. As more adsorbent beds are operating on the adsorption step which corresponds to higher feed rates, the sub-cycle time, defined as the total cycle time divided by the number of adsorbent beds, decreases which has the effect of reducing the time available for the other steps in the cycle. Contrary to previous art, it has been found that reducing the time for receiving purge has a more significant impact in reducing the recovery of the unadsorbed product effluent and also increasing the relative volume of adsorbent required, compared to reducing the time for the adsorption step. Also, all of the previously described cycles have a lower number of adsorbent beds on the purge step than on the adsorption step. With the exception of PSA cycles which employ external tanks, all of the prior art PSA processes require the same number of adsorbent beds on the provide-purge step as on the receiving purge step, or purge step.

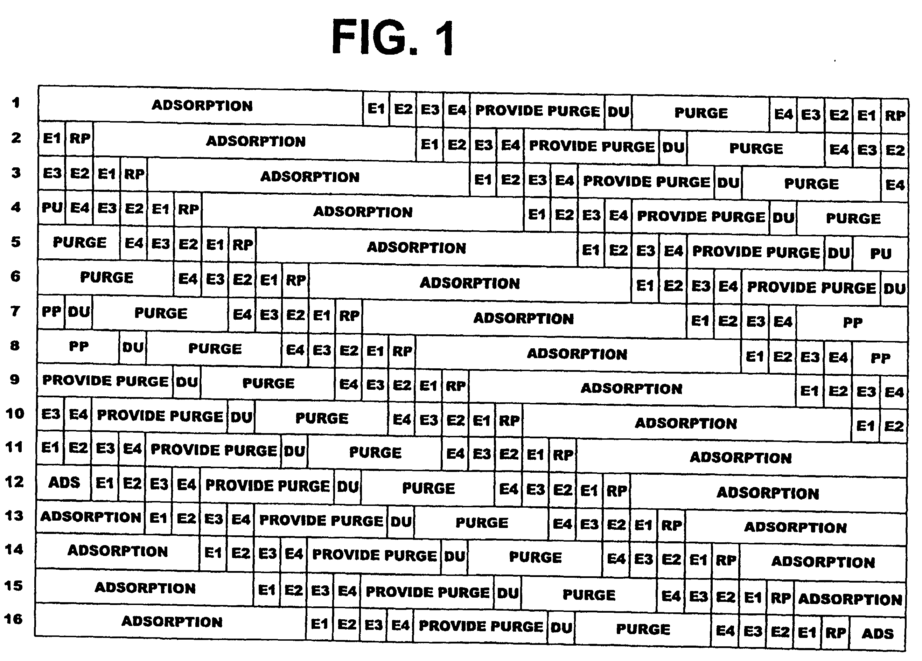

Referring to FIG. 1, a process cycle representation is presented for a conventional PSA system with 16 adsorbent beds. The cycle for each adsorbent bed consists of an adsorption step, four cocurrent depressurization steps, a cocurrent provide-purge step, a countercurrent blow down step, a purge step, four countercurrent repressurization steps, and a final repressurization step. Within this conventional 16-bed cycle at any time, six adsorbent beds are operating in an adsorption step, two adsorbent beds are operating in a purge step and three adsorbent beds are operating in a provide-purge step. The purge gas for any adsorbent bed is directly provided from another adsorption bed. That is, the number of adsorbent beds providing purge and the number of adsorbent beds receiving purge gas, or undergoing the purge step, are the same. For any adsorbent bed in the cycle, the time for the purge step, or purge step time, is equal to the time for the provide-purge step, or provide-purge time. In addition, the time over which the adsorption step occurs, or the adsorption step time, is longer than either the provide-purge step or the purge step.

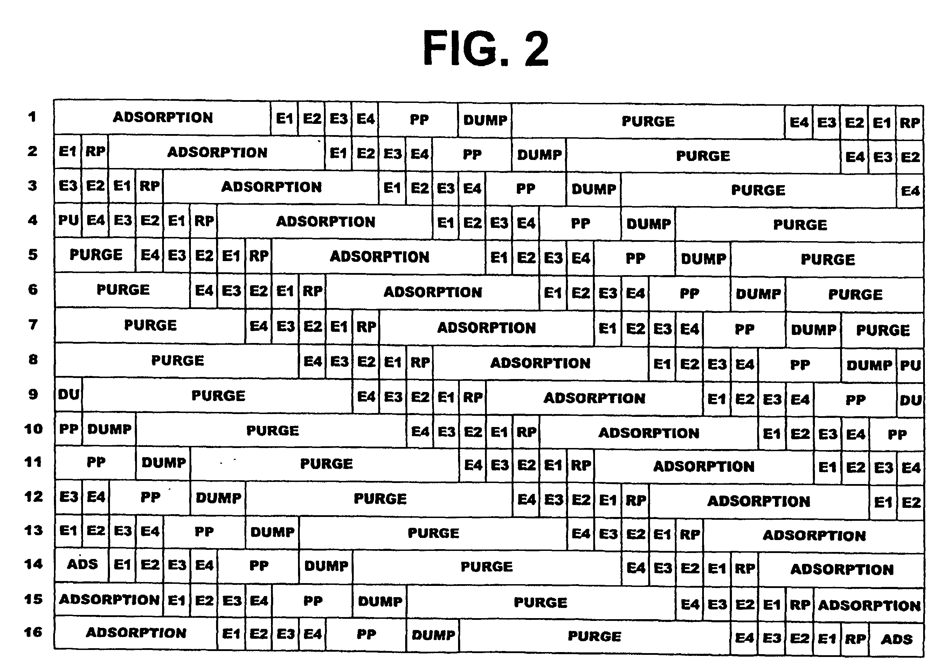

Referring to FIG. 2, a process cycle representative of the present invention is illustrated for 16 adsorbent beds operating in a single train. The cycle depicted in FIG. 2 contains the same steps as shown in FIG. 1 but differs in that there are only four beds in the adsorption step, five beds in the purge step and purge gas is supplied from a single adsorbent bed to more than one adsorbent bed at any time in the cycle. Furthermore, the purge time is significantly longer than the adsorption time for any bed in the cycle. Referring to FIG. 2, following the adsorption step, adsorption bed 1 undergoes four cocurrent depressurization or equalization steps. During the first equalization step, adsorbent bed 1 is cocurrently linked with adsorbent bed 6. During the next equalization step, adsorbent bed 1 is linked to adsorbent bed 7. During the third equalization step, adsorbent bed 1 is linked to adsorbent bed 8 and during the last or fourth equalization step, adsorbent bed 1 is linked to adsorbent bed 9. Adsorbent bed 1 then undergoes a provide-purge step wherein the adsorption bed is co-currently depressurized and a purge gas is withdrawn from adsorbent bed 1 and passed to adsorbent beds 10, 11, 12, 13, and 14 to provide purge gas for purging essentially all of those beds during a first portion of the provide-purge step. In this example, at the same time, adsorbent bed 16 is also undergoing cocurrent depressurization and providing a purge gas to adsorbent beds 10, 11, 12, 13, and 14. In the next portion of the provide-purge step, purge gas is provided to adsorbent beds 11, 12, 13, 14, and 15 and in the final segment of the provide-purge step, purge gas is supplied to beds 11, 12, 13, 14, and 15. At the same time, adsorbent bed 2 is also undergoing cocurrent depressurization and providing a purge gas to the same adsorbent beds 11, 12, 13, 14, and 15. The countercurrent blow down step follows the provide-purge step. In the countercurrent blow down step, the adsorbent bed is depressurized countercurrently to release a waste gas stream. The first adsorbent bed is then purged countercurrently with purge gas initially from adsorbent bed 3, then adsorbent beds 3 and 4, then adsorbent bed 4, then adsorbent beds 4 and 5, then adsorbent bed 5, then adsorbent beds 5 and 6, then adsorbent bed 6, then adsorbent beds 6 and 7, then adsorbent bed 7, and finally from adsorbent beds 7 and 8. During the initial phase of the countercurrent purge of adsorbent bed 1, adsorbent bed 2 is undergoing countercurrent blow down to waste pressure. Adsorbent bed 3 is undergoing a cocurrent provide-purge step, adsorbent bed 4 is undergoing the fourth co-current equalization step with adsorbent bed 12, adsorbent bed 5 is undergoing the second cocurrent equalization step with adsorbent bed 11, adsorbent beds 6, 7, 8, and 9 are on the adsorption step, adsorbent bed 10 is undergoing final repressurization, adsorbent bed 11 is undergoing second countercurrent equalization with adsorbent bed 5, adsorbent bed 12 is undergoing countercurrent equalization with adsorbent bed 11, and adsorbent beds 13, 14, 15, and 16 are also undergoing countercurrent purge. In this manner, purge gas is supplied from one or more adsorbent beds to at least two other beds undergoing a purge step. At the end of the last equalization step, adsorbent bed 1 is repressurized with the adsorption pressure. Repressurization can be accomplished by reintroducing feed or by countercurrently introducing a portion of the product stream. In a single train multiple bed pressure swing adsorption zone of 16 adsorbent beds it is preferred that the cycle includes at least four beds simultaneously in the adsorption stage, at least five beds simultaneously in the purge stage, and that the purge step time exceeds the adsorption step time by a ratio of 1.25 times the adsorption step time. When a portion of the provide purge gas is provided by an adsorbent bed undergoing the final concurrent depressurization step, the provide purge step time comprises between 0.15 and 0.4 times the purge step time.

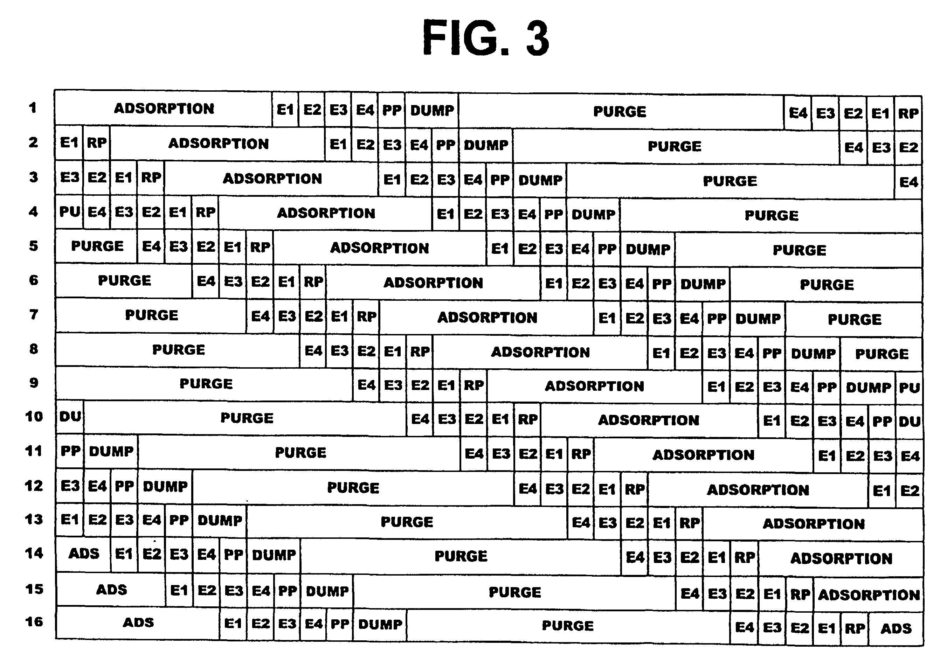

Referring to FIG. 3, a process cycle of the present invention in an alternative embodiment for a 16-bed cycle is represented. In the 16-bed cycle in FIG. 3, there are four adsorption steps and six purge steps. In this configuration, the cocurrent provide purge is taken for part of the step simultaneously with the last cocurrent equalization and for part of the step separately. The cocurrent provide purge is taken from one adsorbent bed and is passed to six adsorbent beds simultaneously.

### EXAMPLES

### EXAMPLE I

Table 1 illustrates a conventional PSA cycle according to US-A-3,986,849 (Fuderer et al.) for a cycle employing 12 adsorbent beds. In the conventional cycle, the adsorption step time and the depressurization step time are equal and each represents approximately one-third of the total cycle time. Receiving purge gas represents 13 percent of the cycle and repressurization represents approximately 21 percent of the total cycle. Similarly, for a conventional 16-bed cycle of the prior art as shown in FIG. 1, the distribution of the steps within the cycle are shown in Table 1 in the 16-bed cycle. Adsorption time now accounts for approximately 37.5 percent of the cycle, depressurization amounts to about 31.3 percent of the total cycle, receiving purge gas amounts to about 15.6 percent of the cycle, and repressurization amounts to about 15.6 percent of the cycle. At high feed rates, the volume of the adsorbent bed reaches the maximum practical size beyond which it is necessary to reduce the adsorption time and correspondingly the total cycle time. This has the desirable effect of reducing the specific adsorbent inventory but has the undesirable effect of reducing the time for receiving purge. Reducing the receiving purge time significantly reduces the recovery of the unadsorbed product effluent and increases the relative volume of adsorbent required per volume of feed. Thus, the expected increase in product capacity is not reached and in fact it is doubly penalized. The recovery of the unadsorbed product effluent is reduced and relative volume of adsorbent required per volume of feed is increased.

**TABLE 1**

| Distribution of PSA Process Steps, % | | |
|---|---|---|
| Process Step | 12-Bed Cycle | 16-Bed Cycle |
| Adsorption | 33.0 | 37.5 |
| Depressurization | 33.0 | 31.3 |
| Receive Purge | 13.0 | 15.6 |
| Repressurization | 21.0 | 15.6 |
| Total Cycle | 100.0 | 100.0 |

### EXAMPLE II

Table 2 illustrates a PSA cycle of the present invention for a 16-bed cycle as shown in FIG. 2. According to the present invention, the time on the receiving purge step is increased and the provide-purge step is de-coupled from the receive purge step. The adsorption step now amounts to approximately 25 percent of the total cycle, the depressurization steps amount to approximately 28.1 percent of the total cycle, the receive purge steps account for approximately 31.3 percent of the total cycle, and the repressurization steps remain at 15.6 percent of the cycle. Although there is less than about a 0.1 percent reduction in the recovery of the unadsorbed product effluent, there is no increase in the requirement for the relative volume of adsorbent per volume of feed and the total cycle time is reduced, translating into an overall increase in the capacity. A further advantage of this type of cycle is that there are more adsorbers on the countercurrent depressurization step and purge step, these steps are discharging gas to the low pressure, and the composition leaving the adsorber varies with time. Having more adsorbers on the step provides for much improved mixing of these gases before the mixing (or surge) drum. This can significantly reduce the volume required for mixing and hence the cost of this drum as well as providing for much better control of the low pressure gas.

**TABLE 2**

| Distribution of New PSA Process Steps, % | |
|---|---|
| Process Step | 16-Bed Cycle |
| Adsorption | 25.0 |
| Depressurization | 28.1 |
| Receive Purge | 31.3 |
| Repressurization | 15.6 |
| Total Cycle | 100.0 |

### EXAMPLE III

A pilot plant was used for the evaluation of the effect of changing the purge time relative to the adsorption time in PSA cycles. The pilot plant consisted of a single adsorbent chamber containing about 340 cc of adsorbent along with the ancillary vessels, valves, and connecting piping required to simulate multi-bed PSA cycles. The feed included about 72.5 mole percent hydrogen, 0.67 mole percent nitrogen, 2.04 mole percent carbon monoxide, 5.57 mole percent methane, and about 19.2 mole percent carbon dioxide. The adsorbent comprised activated carbon and a zeolite molecular sieve to produce a product hydrogen which comprised less than about 1 ppm carbon monoxide and about 1 ppm methane. The chamber was operated in a cyclic adsorption and desorption sequence over a range of operating pressures from about 2200 kPa (320 psia) to about 160 kPa (23 psia). The purge pressure was about 160 kPa (23 psia), the last equalization pressure was about 614 kPa (89 psia), and the provide-purge pressure was about 255 kPa (37 psia). The bed was repressurized with product gas at a product pressure of about 2140 kPa (310 psia). The feed temperature was maintained at the ambient temperature which averaged about 21°C (70°F). The temperature of the adsorbent chamber was essentially the same as the feed temperature or within about 6°C of the feed temperature with surprisingly little variation during the adsorption time in the cycle. The PSA cycle time employed for the field tests comprised an adsorption time which ranged from about 90 seconds to about 180 seconds. The equalization time and the blow down step times were about 30 seconds and the provide-purge step time was about 60 seconds. The performance in terms of hydrogen recovery and capacity in terms of feed per cycle was measured as shown in Table 3.

**TABLE 3**

| PSA Performance | | | |
|---|---|---|---|
| Adsorption Time, seconds | 180 | 180 | 90 |
| Purge Time, seconds | 90 | 45 | 90 |
| H₂ Recovery, % | 87.4 | 85.9 | 87.2 |
| Capacity | 100 | 91 | 100 |

These results clearly show that reducing the adsorption step time by a ratio of about 2 (from 180 seconds to 90 seconds) results in a change in the hydrogen recovery of about 0.2 percent while a change in the purge step time by a similar ratio (from 90 to 45 seconds) results in a change in hydrogen recovery of about 1.5 percent. Thus, the effect of reducing the purge step time is 8 to 10 times more significant than reducing the adsorption step time. In a PSA process, the total cycle time has a direct relationship to the cost of the equipment. The shorter the total cycle time, the lower the cost. As supported by the above results, the total cycle time can be shortened with minimal effect on the overall recovery by increasing the purge step time relative to the adsorption step time.

### EXAMPLE IV

The pilot plant and procedure described in Example III was used to evaluate the effect on product recovery and cycle time for reducing the adsorption step time relative to the provide-purge step time. Table 4 summarizes the results for a hydrogen feed containing about 99 mole percent hydrogen and 1 mole percent carbon monoxide. The adsorbent employed for the separation was a molecular sieve of the 5A type and the adsorption took place at about 21°C (70°F). The PSA process comprised three equalization steps.

**TABLE 4**

| PSA Performance | | |
|---|---|---|
| Adsorption Time, seconds | 180 | 60 |
| Purge Time, seconds | 90 | 90 |
| H₂ Recovery, % | 89.4 | 89.2 |
| Capacity | 100 | 96 |

The first column in Table 4 shows the hydrogen recovery for a 180-second adsorption step time in a conventional PSA cycle with a 12-minute total cycle time wherein the ratio of the purge step time to the adsorption step time was about 0.5. In the second column, the results of a cycle of the present invention are shown wherein the ratio of the purge step time to the adsorption step time is increased to about 1.5 and the total cycle time is reduced to 10 minutes. The results of Example IV show that for a 20 percent decrease in the cycle time by decreasing the adsorption step time relative to the purge step time, the hydrogen recovery is only reduced slightly.

## Claims

1. A process for the separation of a non-adsorbable gas from a gas mixture comprising the non-adsorbable gas and an adsorbable gas in a single train pressure swing adsorption zone, the process comprising passing the gas mixture to the single train pressure swing adsorption zone and withdrawing a product gas stream comprising the non-adsorbable gas and a waste gas stream comprising the adsorbable gas, said single train pressure swing adsorption zone having a plurality of adsorbent beds employing in each adsorbent bed an adsorption step, at least two cocurrent equalization steps including a final cocurrent equalization step, a provide-purge step, a countercurrent blow down step, a purge step, at least three countercurrent equalization steps including a final countercurrent equalization step and a repressurization step, each of said steps occurring in a sequential manner and offset in time wherein the adsorption step occurs over an adsorption step time, the provide-purge step occurs over a provide-purge step time and a purge step occurs over a purge step time, the purge step time being greater than the adsorption step time and wherein said purge step comprises the adsorbent bed undergoing a purge step receiving a purge gas from one or more other adsorbent beds undergoing the provide-purge step wherein said one or more other adsorbent beds are simultaneously providing the purge gas to the adsorbent bed undergoing the purge step and wherein at any time the number of adsorbent beds undergoing the adsorption step is exceeded by the number of adsorbent beds undergoing the purge step.

2. The process of claim 1 wherein a ratio of the purge step time to the adsorption step time comprises greater than 1.0 and less than 2.0.

3. The process of claim 1 wherein the gas mixture is passed to the single train pressure swing adsorption zone at a feed rate greater than 110 thousand normal cubic meters per hour (100 million standard cubic feet per day).

4. The process of claim 1 wherein the single train pressure swing adsorption zone comprises from 10 to 20 adsorbent beds.

5. The process of claim 1 wherein the multiple bed pressure swing adsorption zone comprises a single train of 16 adsorbent beds, wherein the process comprises at least four adsorption steps, at least five purge steps, and the purge step time exceeds the adsorption step time by a ratio of 1.25 times the adsorption step time.

6. The process of claim 1 wherein a portion of the purge gas is provided by an adsorbent bed undergoing the final cocurrent depressurization step.

7. The process of claim 1 wherein the provide-purge step occurs over a provide-purge step time and the provide-purge time is less than the purge time, said provide-purge step time comprising between 0.15 and 0.4 times the purge step time.

8. The process of claim 1 wherein the non-adsorbable component comprises hydrogen and the adsorbable component is selected from the group consisting of hydrocarbons, carbon dioxide, carbon monoxide, nitrogen, and mixtures thereof or wherein the non-adsorbable component comprises methane and the adsorbable component is selected from the group consisting of carbon dioxide, hydrocarbons with more than one carbon atom, sulfur oxides, hydrogen sulfide, and mixtures thereof.

## Patentansprüche

1. Verfahren für die Abtrennung eines nicht adsorptionsfähigen Gases von einer Gasmischung, die das nicht adsorbierbare und ein adsorbierbares Gas in einer Einbahndruckpendel-Adsorptionszone umfasst, wobei das Verfahren Folgendes umfasst: Zuleiten der Gasmischung zu der Einbahndruckpendel-Adsorptionszone und Entnehmen eines Produktgasstroms umfassend das nicht adsorbierbare Gas und einen Abgasstrom, der das adsorbierbare Gas umfasst, wobei die Einbahndruckpendel-Adsorptionszone eine Mehrzahl von adsorptionsfähigen Betten aufweist, wobei in jedem adsorptionsfähigen Bett ein Adsorptionsschritt, mindestens zwei gleichzeitig stattfindende Ausgleichsschritte, einschließlich eines abschließenden gleichzeitig stattfindenden Ausgleichsschritts, ein Ausspülungsbereitstellungsschritt, ein Gegenstromablassschritt, ein Ausspülschritt, mindestens drei Gegenstrom-Ausgleichsschritte, einschließlich eines abschließenden Gegenstrom-Ausgleichsschritts und ein Wiederunterdrucksetzungsschritt erfolgt bzw. erfolgen, wobei jeder der Schritte auf sequentielle Art und Weise stattfindet und bezüglich der Zeit versetzt ist, wobei der Adsorptionsschritt über eine Adsorptionsschrittzeit, der Ausspülungsbereitstellungsschritt über eine Ausspülungsbereitstellungsschrittzeit und ein Ausspülungsschritt über eine Ausspülungsschrittzeit stattfindet, wobei die Ausspülungsschrittzeit länger ist als die Adsorptionsschrittzeit und wobei der Ausspülungsschritt es umfasst, dass das adsorptionsfähige Bett einen Ausspülungsschritt durchmacht, bei dem es ein Ausspülungsgas aus einem oder mehreren anderen adsorptionsfähigen Betten aufnimmt, die den Ausspülungsbereitstellungsschritt durchmachen, wobei das eine andere oder die mehreren anderen adsorptionsfähige(n) Bett(en) gleichzeitig das Ausspülungsgas an das adsorptionsfähige Bett liefert/liefern, das den Ausspülungsschritt durchmacht und wobei die Anzahl adsorptionsfähiger Betten, die den Adsorptionsschritt durchmachen zu jeder Zeit von der Anzahl der adsorptionsfähigen Betten, die den Ausspülungsschritt durchmachen, überstiegen wird.

2. Verfahren nach Anspruch 1, wobei ein Verhältnis der Ausspülungsschrittzeit zur Adsorptionsschrittzeit mehr als 1,0 und weniger als 2,0 umfasst.

3. Verfahren nach Anspruch 1, wobei die Gasmischung der Einbahndruckpendel-Adsorptionszone mit einer Zuführrate von mehr als 110 tausend Normalkubikmetern pro Stunde (100 Millionen Standardkubikfuß pro Tag) zugeleitet wird.

4. Verfahren nach Anspruch 1, wobei die Einbahndruckpendel-Adsorptionszone 10 bis 20 adsorptionsfähige Betten umfasst.

5. Verfahren nach Anspruch 1, wobei die Mehrbettdruckpendel-Adsorptionszone eine Einbahn von 16 adsorptionsfähigen Betten umfasst, wobei das Verfahren mindestens vier Adsorptionsschritte, mindestens fünf Ausspülungsschritte umfasst und die Ausspülungsschrittzeit die Adsorptionsschrittzeit um ein Verhältnis von 1,25 mal der Adsorptionsschrittzeit übersteigt.

6. Verfahren nach Anspruch 1, wobei ein Teil des Ausspülungsgases durch ein adsorptionsfähiges Bett bereitgestellt wird, das den abschließenden gleichzeitig stattfindenden Druckentlastungsschritt durchmacht.

7. Verfahren nach Anspruch 1, wobei der Ausspülungsbereitstellungsschritt über eine Ausspülungsbereitstellungsschrittzeit stattfindet, und die Ausspülungsbereitstellungszeit kürzer ist als die Ausspülungszeit, wobei die Ausspülungsbereitstellungsschrittzeit das 0,15- bis 0,4fache der Ausspülungsschrittzeit umfasst.

8. Verfahren nach Anspruch 1, wobei die nicht adsorptionsfähige Komponente Wasserstoff umfasst und die adsorbierbare Komponente aus der Gruppe ausgewählt wird bestehend aus Kohlenwasserstoffen, Kohlendioxid, Kohlenmonoxid, Stickstoff und Mischungen derselben oder wobei die nicht adsorptionsfähige Komponente Methan umfasst und die adsorptionsfähige Komponente aus der Gruppe ausgewählt wird bestehend aus Kohlendioxid, Kohlenwasserstoffen mit mehr als einem Kohlenstoffatom, Schwefeloxiden, Schwefelwasserstoff und Mischungen derselben.

## Revendications

1. Procédé en vue de la séparation d'un gaz non-capable d'être adsorbé provenant d'un mélange gazeux comprenant le gaz non capable d'être adsorbé et un gaz capable d'être adsorbé dans une zone à adsorption modulée en pression à train unique, le procédé comprenant le passage du mélange gazeux à la zone à adsorption modulée en pression à train unique et le retrait d'un courant de produit gazeux comprenant le gaz non capable d'être adsorbé et un courant de gaz de rejet comprenant le gaz capable d'être adsorbé, ladite zone à adsorption modulée en pression à train unique ayant une pluralité de lits adsorbants employant, dans chaque lit adsorbant, une étape d'adsorption, au moins deux étapes d'égalisation à co-courant, y compris une étape finale d'égalisation à co-courant, une étape alimentation-purge, une étape de chasse à contre courant, une étape de purge, au moins trois étapes d'égalisation à contre courant, y compris une étape finale d'égalisation à contre courant et une étape de re-pressurisation, chacune desdites étapes se produisant d'une manière séquentielle et décalée dans le temps, **caractérisé en ce que** l'étape d'adsorption se produit au cours d'une durée de l'étape d'adsorption, **en ce que** l'étape alimentation-purge se produit au cours d'une durée de l'étape alimentation-purge et qu'une étape de purge se produit au cours d'une durée de l'étape de purge, la durée de l'étape de purge étant supérieure à ladite durée de l'étape d'adsorption, et **caractérisé en ce que** ladite étape de purge comprend le fait de soumettre le lit adsorbant à une étape de purge, le lit recevant un gaz de purge d'un ou de plusieurs autres lits adsorbants subissant l'étape alimentation-purge, **caractérisé en ce que** ledit un ou plusieurs autres lits adsorbants fournit ou fournissent simultanément du gaz de purge au lit adsorbant subissant l'étape de purge et **caractérisé en ce qu'**à tout moment, le nombre de lits adsorbants subissant l'étape d'adsorption est excédé par le nombre de lits absorbants subissant l'étape de purge.

2. Procédé selon la revendication 1, **caractérisé en ce qu'**un rapport de la durée de l'étape de purge à la durée de l'étape d'adsorption comprend un domaine supérieur à 1,0 et inférieur à 2,0.

3. Procédé selon la revendication 1, **caractérisé en ce que** le mélange gazeux passe à la zone à adsorption modulée en pression à train unique à un débit supérieur à 110 milliers de mètres cubes normaux par heure (100 millions de pieds cubiques standard par jour).

4. Procédé selon la revendication 1, **caractérisé en ce que** la zone à adsorption modulée en pression à train unique comprend de 10 à 20 lits adsorbants.

5. Procédé selon la revendication 1, **caractérisé en ce que** la zone à adsorption modulée en pression à lits multiples comprend un train unique de 16 lits adsorbants, **en ce que** le procédé comprend au moins quatre étapes d'adsorption, au moins cinq étapes de purge, et **en ce que** la durée de l'étape de purge dépasse la durée de l'étape d'adsorption par un rapport égal à 1,25 fois la durée de l'étape d'adsorption.

6. Procédé selon la revendication 1, **caractérisé en ce qu'**une portion du gaz de purge est fournie par un lit adsorbant subissant l'étape finale de dé-pressurisation en co-courant.

7. Procédé selon la revendication 1, **caractérisé en ce que** l'étape alimentation-purge se produit au cours de la durée de l'étape alimentation-purge et **en ce que** la durée de l'étape alimentation-purge est inférieure à la durée de la purge, ladite durée de l'étape alimentation-purge comprenant entre 0,15 et 0,4 fois la durée de l'étape de purge.

8. Procédé selon la revendication 1, **caractérisé en ce que** le composant non capable d'être adsorbé comprend de l'hydrogène et **en ce que** le composant capable d'être adsorbé est sélectionné parmi le groupe constitué d'hydrocarbures, du dioxyde de carbone, du monoxyde de carbone, de l'azote et de mélanges de ces derniers ou **caractérisé en ce que** le composant non capable d'être adsorbé comprend du méthane et **en ce que** le composant capable d'être adsorbé est sélectionné parmi le groupe constitué du dioxyde de carbone, d'hydrocarbures ayant plus d'un atome de carbone, d'oxydes de soufre, d'hydrogène sulfuré et de mélanges de ces derniers.
